# EUROPEAN PATENT APPLICATION

(11) **EP 4 838 969 A2**
(43) Date of publication of application: **11.11.2026**
(21) Application number: 25725719.6
(22) Date of filing: 20.01.2025
(51) Int. Cl.: H04W 56/00

(54) **PROCESSING METHOD, COMMUNICATION DEVICE AND STORAGE MEDIUM**

(71) Applicant: Shenzhen Transsion Holdings Co., Ltd., Shenzhen, Guangdong 518000 (CN)
(72) Inventor: HUANG, Chiunwei, Shenzhen, Guangdong 518000 (CN); LI, Xin, Shenzhen, Guangdong 518000 (CN)
(74) Representative: Barker Brettell LLP
(86) International application number: PCT/CN2025/073366
(87) International publication number: WO 2025/098535

(57) **Abstract**

According to the technical solutions of the present application, a timing advance value of at least one candidate cell is applied in response to determining that a first condition is satisfied, which refines an application mechanism for a timing advance, thereby supporting random access channel-less conditional LTM-switch.

## Description

### TECHNICAL FIELD

The present application relates to the technical field of communication technologies, and in particular, to a processing method, a communication device and a storage medium.

### BACKGROUND

Timing Advance (TA) is a key technology for uplink synchronization in cellular communication systems. The TA mechanism ensures that data transmitted by terminal devices at different distances arrives at a network device synchronously, thereby avoiding inter-symbol interference and inter-subcarrier interference on the uplink.

During the conception and implementation of the present application, the inventors have identified at least the following problem: in existing protocols, an application mechanism for a timing advance is imperfect during conditional LTM (L1/L2 Triggered Mobility, Layer 1/Layer 2 triggered mobility) switch, which may not support random access channel-less conditional LTM-switch. Therefore, the application mechanism for the timing advance needs to be refined.

The foregoing description is provided to present general background information and does not necessarily constitute prior art.

### SUMMARY

A main objective of the present application is to provide a processing method, a communication device and a storage medium, aimed at refining an application mechanism for a timing advance to support a random access channel-less conditional LTM-switch.

The present application provides a processing method, applicable to a terminal device (e.g., a mobile phone), the method includes the following step:
S2: applying a timing advance value of at least one candidate cell in response to determining that a first condition is satisfied.

Optionally, satisfying the first condition includes at least one of the following:
a timing advance timer and/or a valid time alignment timer being running;
a media access control layer receiving a conditional LTM cell switch request and/or a candidate cell identifier sent by a radio resource control layer; or
the timing advance value of the at least one candidate cell being not a maximum value.

Optionally, the method further includes at least one of the following:
receiving conditional LTM configuration information;
applying a timing advance value measured by the terminal device in a case that the timing advance value of the at least one candidate cell is the maximum value;
starting the timing advance timer and/or the valid time alignment timer; or
the media access control layer reporting indication information to the radio resource control layer.

Optionally, the method further includes at least one of the following:
the conditional LTM configuration information being carried in radio resource control reconfiguration signaling;
the conditional LTM configuration information including at least one of a conditional LTM candidate identifier, a conditional LTM execution condition identifier, a Layer 1 measurement event identifier, the timing advance timer, or the valid time alignment timer;
the indication information including at least one of the Layer 1 measurement event identifier, the conditional LTM execution condition identifier, an LTM candidate identifier, or the conditional LTM candidate identifier;
the indication information being used to trigger the radio resource control layer to perform conditional LTM execution condition evaluation and/or execute conditional LTM cell switch; or
the timing advance timer and/or the valid time alignment timer being used for the at least one candidate cell.

Optionally, the method further includes at least one of the following:
in response to determining that a conditional LTM execution condition is satisfied, the radio resource control layer sending the conditional LTM cell switch request and/or the candidate cell identifier to the media access control layer; or
triggering the conditional LTM cell switch in response to determining that the at least one candidate cell satisfies the conditional LTM execution condition.

The present application further provides a processing method, applicable to a network device (e.g., a base station), the method includes the following step:
S1: sending conditional LTM configuration information, so that a terminal device applies a timing advance value based on the conditional LTM configuration information.

Optionally, the method further includes at least one of the following:
the conditional LTM configuration information being carried in radio resource control reconfiguration signaling;
the conditional LTM configuration information including at least one of a conditional LTM candidate identifier, a conditional LTM execution condition identifier, a Layer 1 measurement event identifier, a timing advance timer, or a valid time alignment timer; or
the timing advance value including a timing advance value of at least one candidate cell and/or a timing advance value measured by the terminal device.

Optionally, the terminal device applying the timing advance value based on the conditional LTM configuration information includes at least one of the following:
in response to determining that the conditional LTM configuration information satisfies a first condition, the terminal device applying the timing advance value of the at least one candidate cell; or
if the timing advance value of the at least one candidate cell is a maximum value, the terminal device applying the timing advance value measured by the terminal device.

Optionally, satisfying the first condition includes at least one of the following:
the timing advance timer and/or the valid time alignment timer being running;
the timing advance value of the at least one candidate cell being not the maximum value; or
a media access control layer of the terminal device receiving a conditional LTM cell switch request and/or a candidate cell identifier sent by a radio resource control layer.

Optionally, the method further includes at least one of the following:
the timing advance timer and/or the valid time alignment timer being started in a case that the terminal device receives the timing advance value of the at least one candidate cell;
the timing advance timer and/or the valid time alignment timer being started in a case that the timing advance value of the at least one candidate cell is the maximum value; or
the media access control layer of the terminal device reporting indication information to the radio resource control layer.

Optionally, the method further includes at least one of the following:
the indication information including at least one of the Layer 1 measurement event identifier, the conditional LTM execution condition identifier, an LTM candidate identifier, or the conditional LTM candidate identifier;
the indication information being used to trigger the radio resource control layer of the terminal device to perform conditional LTM execution condition evaluation and/or execute conditional LTM cell switch; or
the timing advance timer and/or the valid time alignment timer being used for the at least one candidate cell.

The present application further provides a communication device, including: a memory, a processor, and a processing program stored on the memory and executable on the processor, where the processing program, when executed by the processor, implements the step of the processing method according to any one of the above.

The communication device in the present application may be a terminal device (e.g., a mobile phone), a network device (e.g., a base station), or a chip (e.g., an SOC or a baseband chip with communication functionality), and the specific meaning shall be clarified according to the context.

The present application further provides a computer-readable storage medium, where a processing program is stored on the computer-readable storage medium, and the processing program, when executed by a processor, implements the step of the processing method according to any one of the above.

According to the technical solutions of the present application, a timing advance value of at least one candidate cell is applied in response to determining that a first condition is satisfied, which refines an application mechanism for a timing advance, thereby supporting random access channel-less conditional LTM-switch.

### BRIEF DESCRIPTION OF THE DRAWINGS

The accompanying drawings incorporated herein and constituting a part of this specification illustrate embodiments consistent with the present application, and together with the description, serve to explain the principles of the present application. To more clearly illustrate the technical solutions of the embodiments of the present application, the drawings used in the description of the embodiments will be briefly introduced below. It is obvious that, for a person skilled in the art, other drawings can be obtained according to these drawings without inventive effort.
FIG. 1 is a schematic diagram showing a hardware structure of a mobile terminal for implementing various embodiments of the present application.
FIG. 2 is a schematic diagram showing an architecture of a communication network system according to an embodiment of the present application.
FIG. 3 is a schematic diagram showing a hardware structure of a controller 140 according to the present application.
FIG. 4 is a schematic diagram showing a hardware structure of a network node 150 according to the present application.
FIG. 5 is a schematic flowchart showing a processing method according to a first embodiment.
FIG. 6 is a schematic flowchart showing a processing method according to a second embodiment.
FIG. 7 is a schematic diagram showing interaction timing according to the second embodiment.
FIG. 8 is a schematic diagram showing interaction timing according to a fourth embodiment.
FIG. 9 is a schematic flowchart showing a processing method according to a sixth embodiment.
FIG. 10 is a first schematic structural diagram of a processing apparatus according to an embodiment of the present application.
FIG. 11 is a second schematic structural diagram of a processing apparatus according to an embodiment of the present application.
FIG. 12 is a schematic structural diagram of a communication device according to an embodiment of the present application.

The objectives, functional features, and advantages of the present application will be further described with reference to the embodiments and the accompanying drawings. Through the above drawings, clear embodiments of the present application have been shown, which will be described in more detail later. These drawings and written description are not intended to limit the scope of the concept of the present application in any way, but to illustrate the concept of the present application to a person skilled in the art by referring to specific embodiments.

### DETAILED DESCRIPTION OF THE EMBODIMENTS

Exemplary embodiments will be described in detail herein, examples of which are illustrated in the accompanying drawings. When the following description refers to the accompanying drawings, the same numbers in different drawings represent the same or similar elements unless otherwise indicated. The implementations described in the following exemplary embodiments do not represent all implementations consistent with the present application. Rather, they are merely examples of apparatuses and methods consistent with some aspects of the present application as detailed in the appended claims.

It should be noted that, in this application, the terms "comprise", "include", or any other variation thereof are intended to cover a non-exclusive inclusion, such that a process, method, article, or apparatus that includes a list of elements includes not only those elements but also other elements not expressly listed, or elements inherent to such process, method, article, or apparatus. Without further limitation, an element defined by the phrase "including a..." does not exclude the presence of additional identical elements in the process, method, article, or apparatus that includes the element; and/or, components, features, or elements bearing the same designation in different embodiments of the present application may have the same meaning or different meanings, and the specific meaning thereof shall be determined by the interpretation thereof in that particular embodiment or further in conjunction with the context of that particular embodiment.

It should be understood that although the terms first, second, third, etc. may be used herein to describe various information, such information should not be limited to these terms. These terms merely serve to distinguish one type of information from another. For example, first information may also be referred to as second information, and similarly, second information may also be referred to as first information, without departing from the scope of this application. Depending on the context, the word "if" as used herein may be interpreted as "at the time of" or "when" or "in response to determining". Furthermore, as used herein, the singular forms "a", "an", and "the" are intended to include the plural forms as well, unless the context clearly indicates otherwise. It will be further appreciated that the terms "comprise" and "include", when used herein, specify the presence of stated features, steps, operations, elements, components, items, species, and/or groups, but do not preclude the presence or addition of one or more other features, steps, operations, elements, components, items, species, and/or groups. The terms "or", "and/or", "including at least one of", etc. as used herein may be interpreted as inclusive or meaning any one or any combination. For example, "including at least one of the following: A, B, C" means "any one of: A; B; C; A and B; A and C; B and C; A and B and C", and similarly, "A, B or C" or "A, B and/or C" means "any one of: A; B; C; A and B; A and C; B and C; A and B and C". Exceptions to this definition will occur only when a combination of elements, functions, steps, or operations is inherently mutually exclusive in some manner.

It should be understood that, although the steps in the flowcharts of the embodiments of the present application are shown in sequence as indicated by the arrows, these steps are not necessarily executed in the order indicated by the arrows. Unless explicitly stated herein, the execution of these steps is not strictly limited in order, and they may be executed in other orders. Moreover, at least a part of the steps in the figures may include multiple sub-steps or multiple stages, which are not necessarily executed at the same time, but may be executed at different times, and the execution order thereof is not necessarily sequential, but may be executed in turn or alternately with at least a part of other steps or sub-steps or stages of other steps.

Depending on the context, the words "if" and "on condition that" as used herein may be interpreted as "at the time of" or "when" or "in response to determining" or "in response to detecting". Similarly, depending on the context, the phrases "if determined" or "if detected (a stated condition or event)" may be interpreted as "when determined" or "in response to determining" or "when detected (a stated condition or event)" or "in response to detecting (a stated condition or event)".

It should be noted that, in this application, step numbers such as S1 and S2 are used for the purpose of more clearly and concisely describing corresponding subject matter, and do not constitute a substantial limitation on the order. A person skilled in the art may execute S2 first and then S1 in specific implementation, but these shall all be within the protection scope of the present application.

It should be understood that the specific embodiments described herein are merely illustrative of the present application and are not intended to limit the present application.

In the following description, suffixes such as "module", "component", or "unit" used for representing elements are only for facilitating the description of the present application and have no specific meaning per se. Therefore, "module", "component", and "unit" may be used interchangeably.

The communication device in the present application may be a terminal device (e.g., a mobile phone), a network device (e.g., a base station), or a chip (e.g., an SOC or a baseband chip with communication functionality), and the specific meaning shall be clarified according to the context.

A terminal device may also be implemented in various forms. For example, the terminal device described in the present application may include smart terminal devices such as a mobile phone, a tablet computer, a notebook computer, a palmtop computer, a personal digital assistant (Personal Digital Assistant, PDA), a portable media player (Portable Media Player, PMP), a navigation device, a wearable device, a smart bracelet, a pedometer, and fixed terminal devices such as a digital TV and a desktop computer.

In the following description, a mobile terminal will be taken as an example for description. A person skilled in the art will understand that the configuration according to the embodiments of the present application can also be applied to fixed-type terminal devices, in addition to elements specifically used for mobile purposes.

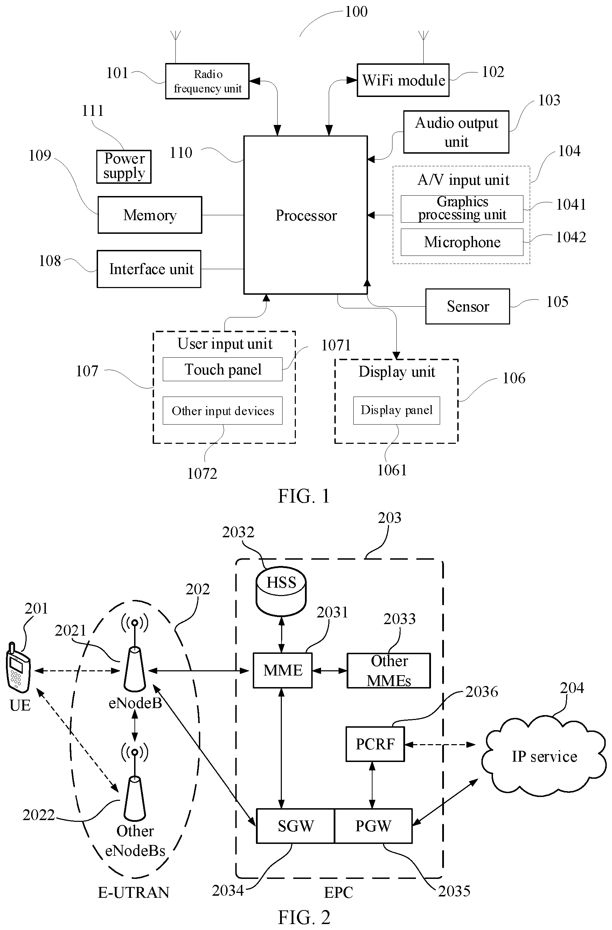

Referring to FIG. 1, FIG. 1 is a schematic diagram showing a hardware structure of a mobile terminal for implementing various embodiments of the present application, and the mobile terminal 100 may include: a radio frequency (Radio Frequency, RF) unit 101, a WiFi module 102, an audio output unit 103, an A/V (Audio/Video) input unit 104, a sensor 105, a display unit 106, a user input unit 107, an interface unit 108, a memory 109, a processor 110, and a power supply 111, etc. A person skilled in the art will understand that the structure of the mobile terminal shown in FIG. 1 does not constitute a limitation on the mobile terminal, and the mobile terminal may include more or fewer components than shown, or combine some components, or arrange different components.

The various components of the mobile terminal will be specifically described below with reference to FIG. 1.

The radio frequency unit 101 may be configured to receive and transmit signals during information transmission or a call. Specifically, it receives downlink information from a base station and then processes the downlink information by the processor 110; and sends uplink data to the base station. Generally, the radio frequency unit 101 includes, but is not limited to, an antenna, at least one amplifier, a transceiver, a coupler, a low noise amplifier, a duplexer, etc. And/or, the radio frequency unit 101 may also communicate with a network and other devices through wireless communication. The wireless communication may be performed according to any communication standard or protocol, including but not limited to GSM (Global System for Mobile communication, global system for mobile communication), GPRS (General Packet Radio Service, general packet radio service), CDMA2000 (Code Division Multiple Access 2000, code division multiple access 2000 ), WCDMA (Wideband Code Division Multiple Access, wideband code division multiple access), TD-SCDMA (Time Division-Synchronous Code Division Multiple Access, time division-synchronous code division multiple access), FDD-LTE (Frequency Division Duplexing-Long Term Evolution, frequency division duplexing-long term evolution), TDD-LTE (Time Division Duplexing-Long Term Evolution, time division duplexing-long term evolution), 5G, and 6G, etc.

WiFi is a short-distance wireless transmission technology. The mobile terminal can help users send and receive emails, browse web pages, and access streaming media, etc. through the WiFi module 102, which provides users with wireless broadband Internet access. Although FIG. 1 shows the WiFi module 102, it should be understood that it is not an essential component of the mobile terminal and can be omitted as required without changing the essence of the present invention.

The audio output unit 103 may convert audio data received by the radio frequency unit 101 or the WiFi module 102 or stored in the memory 109 into audio signals and output the audio signals as sounds when the mobile terminal 100 is in a call signal receiving mode, a call mode, a recording mode, a voice recognition mode, a broadcast receiving mode, or other modes. Moreover, the audio output unit 103 may also provide audio output related to specific functions executed by the mobile terminal 100 (e.g., call signal receiving sound, message receiving sound, etc.). The audio output unit 103 may include a speaker, a buzzer, etc.

The A/V input unit 104 is configured to receive audio or video signals. The A/V input unit 104 may include a graphics processing unit (Graphics Processing Unit, GPU) 1041 and a microphone 1042. The graphics processor 1041 processes image data of still pictures or videos obtained by an image capturing device (e.g., a camera) in a video capturing mode or an image capturing mode. The processed image frames may be displayed on the display unit 106. The image frames processed by the graphics processor 1041 may be stored in the memory 109 (or other storage media) or transmitted via the radio frequency unit 101 or the WiFi module 102. The microphone 1042 may receive sounds (audio data) via the microphone 1042 in an operation mode such as a phone call mode, a recording mode, a voice recognition mode, or other modes, and may process such sounds into audio data. The processed audio (voice) data may be converted into a format transmittable to a mobile communication base station via the radio frequency unit 101 for output in the case of a phone call mode. The microphone 1042 may implement various types of noise cancellation (or suppression) algorithms to eliminate (or suppress) noise or interference generated during the process of receiving and transmitting audio signals.

The mobile terminal 100 further includes at least one sensor 105, such as a light sensor, a motion sensor, and other sensors. Alternatively, the light sensor includes an ambient light sensor and a proximity sensor. Alternatively, the ambient light sensor may adjust the brightness of the display panel 1061 according to the brightness of ambient light, and the proximity sensor may turn off the display panel 1061 and/or backlight when the mobile terminal 100 moves to the ear. As one type of motion sensor, an accelerometer sensor may detect the magnitude of acceleration in each direction (generally three axes), detect the magnitude and direction of gravity when stationary, and may be used for applications such as mobile phone posture recognition (e.g., horizontal and vertical screen switching, related games, magnetometer posture calibration), vibration recognition related functions (e.g., pedometer, tapping), etc. As for other sensors such as a fingerprint sensor, a pressure sensor, an iris sensor, a molecular sensor, a gyroscope, a barometer, a hygrometer, a thermometer, and an infrared sensor that may also be configured on the mobile phone, details are not repeated herein.

The display unit 106 is configured to display information input by a user or information provided to the user. The display unit 106 may include a display panel 1061, which may be configured in the form of a liquid crystal display (Liquid Crystal Display, LCD), an organic light-emitting diode (Organic Light-Emitting Diode, OLED), etc.

The user input unit 107 may be configured to receive input numeric or character information and generate key signal inputs related to user settings and function control of the mobile terminal. Alternatively, the user input unit 107 may include a touch panel 1071 and other input devices 1072. The touch panel 1071, also referred to as a touch screen, may collect touch operations by a user on or near it (e.g., operations by a user using any suitable object or accessory such as a finger, a stylus, etc. on or near the touch panel 1071), and drive a corresponding connection device according to a preconfigured program. The touch panel 1071 may include a touch detection device and a touch controller. Alternatively, the touch detection device detects a touch orientation of the user, detects a signal brought by the touch operation, and transmits the signal to the touch controller; the touch controller receives touch information from the touch detection device, converts it into contact coordinates, and then sends the contact coordinates to the processor 110, and can receive and execute commands sent by the processor 110. And/or, the touch panel 1071 may also be implemented in various types such as resistive, capacitive, infrared, and surface acoustic wave. In addition to the touch panel 1071, the user input unit 107 may also include other input devices 1072. Alternatively, the other input devices 1072 may include, but are not limited to, one or more of a physical keyboard, function keys (e.g., volume control keys, switch keys, etc.), a trackball, a mouse, a joystick, etc., which are not limited herein.

Alternatively, the touch panel 1071 may cover the display panel 1061. When the touch panel 1071 detects a touch operation on or near it, the touch operation is transmitted to the processor 110 to determine the type of touch event, and then the processor 110 provides corresponding visual output on the display panel 1061 according to the type of touch event. Although in FIG. 1, the touch panel 1071 and the display panel 1061 are implemented as two independent components to implement the input and output functions of the mobile terminal, in some embodiments, the touch panel 1071 and the display panel 1061 may be integrated to implement the input and output functions of the mobile terminal, which is not limited herein.

The interface unit 108 serves as an interface through which at least one external device is connected to the mobile terminal 100. For example, the external device may include a wired or wireless headset port, an external power supply (or battery charger) port, a wired or wireless data port, a memory card port, a port for connecting a device having an identification module, an audio input/output (I/O) port, a video I/O port, a headphone port, etc. The interface unit 108 may be configured to receive input (e.g., data information, power, etc.) from an external device and transmit the received input to one or more elements within the mobile terminal 100, or may be configured to transmit data between the mobile terminal 100 and an external device.

The memory 109 may be configured to store software programs and various data. The memory 109 may mainly include a program storage area and a data storage area. Alternatively, the program storage area may store an operating system, an application program required for at least one function (e.g., a sound playback function, an image playback function, etc.), etc.; the data storage area may store data created according to the use of the mobile phone (e.g., audio data, a phone book, etc.), etc. And/or, the memory 109 may include a high-speed random-access memory, and may also include a non-volatile memory, such as at least one magnetic disk storage device, a flash memory device, or other volatile solid-state storage devices.

The processor 110 is a control center of the mobile terminal, connects various parts of the entire mobile terminal using various interfaces and lines, and executes various functions of the mobile terminal and processes data by running or executing software programs and/or modules stored in the memory 109 and calling data stored in the memory 109, thereby performing overall monitoring of the mobile terminal. The processor 110 may include one or more processing units; preferably, the processor 110 may integrate an application processor and a modem processor. Alternatively, the application processor mainly processes an operating system, a user interface, an application program, etc., and the modem processor mainly processes wireless communication. It can be understood that the above modem processor may also not be integrated into the processor 110.

The mobile terminal 100 further includes a power supply 111 (e.g., a battery) for supplying power to various components. Preferably, the power supply 111 may be logically connected to the processor 110 through a power management system, thereby implementing functions such as charging, discharging, and power consumption management through the power management system.

Although not shown in FIG. 1, the mobile terminal 100 may also include a Bluetooth module, etc., which is not repeated herein.

To facilitate understanding of the embodiments of the present application, a communication network system on which the mobile terminal of the present application is based will be described below.

Referring to FIG. 2, FIG. 2 is a schematic diagram showing an architecture of a communication network system according to an embodiment of the present application. The communication network system is a NR (New Radio, new radio) system of general mobile communication technology, and the NR system includes a UE (User Equipment, user equipment) 201, an E-UTRAN (Evolved UMTS Terrestrial Radio Access Network, evolved UMTS terrestrial radio access network) 202, an EPC (Evolved Packet Core, evolved packet core) 203, and an operator's IP service 204, which are sequentially communicatively connected.

Optionally, the UE 201 may be the terminal device 100 described above, which is not repeated herein.

The E-UTRAN 202 includes an eNodeB 2021 and other eNodeBs 2022, etc. Alternatively, the eNodeB 2021 may be connected to other eNodeBs 2022 through a backhaul (e.g., an X2 interface), the eNodeB 2021 is connected to the EPC 203, and the eNodeB 2021 may provide access for the UE 201 to the EPC 203.

The EPC 203 may include a MME (Mobility Management Entity, mobility management entity) 2031, a HSS (Home Subs channel state information reference signal resource indication criber Server, home subscriber server) 2032, other MMEs 2033, a SGW (Serving Gate Way, serving gate way) 2034, a PGW (PDN Gate Way, PDN gate way) 2035, a PCRF (Policy and Charging Rules Function, policy and charging rules function) 2036, etc. Alternatively, the MME 2031 is a control node that processes signaling between the UE 201 and the EPC 203, and provides bearer and connection management. The HSS 2032 is configured to provide some registers to manage functions such as a home location register (not shown), and store user-specific information such as service characteristics and data rates. All user data may be transmitted through the SGW 2034, and the PGW 2035 may provide IP address allocation for the UE 201 and other functions. The PCRF 2036 is a policy and charging control policy decision point for service data flows and IP bearer resources, and selects and provides available policies and charging control decisions for a policy and charging enforcement function unit (not shown).

The IP service 204 may include the Internet, an intranet, an IMS (IP Multimedia Subsystem, IP multimedia subsystem), or other IP services, etc.

Although the above description is given by taking an LTE system as an example, a person skilled in the art should understand that the present application is not only applicable to the LTE system, but also applicable to other wireless communication systems such as GSM, CDMA2000, WCDMA, TD-SCDMA, 5G, and future new network systems (e.g., 6G), etc., which are not limited herein.

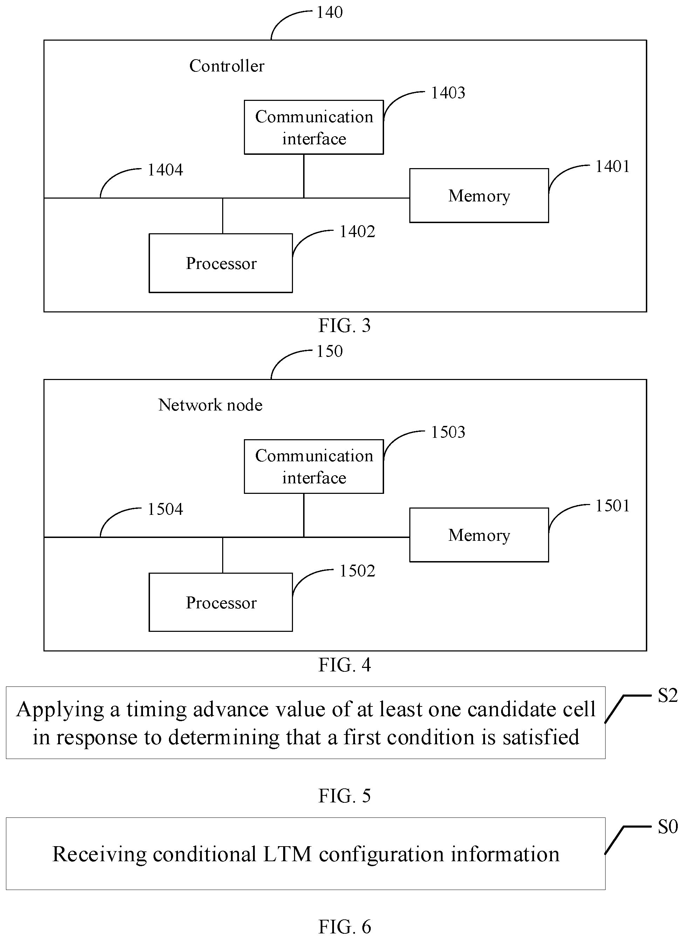

FIG. 3 is a schematic diagram showing a hardware structure of a controller 140 according to the present application. The controller 140 includes: a memory 1401 and a processor 1402. The memory 1401 is configured to store program instructions, and the processor 1402 is configured to call the program instructions in the memory 1401 to execute the steps performed by the controller in the first method embodiment described above. The implementation principles and beneficial effects thereof are similar, and details are not repeated herein.

Optionally, the controller further includes a communication interface 1403, which may be connected to the processor 1402 through a bus 1404. The processor 1402 may control the communication interface 1403 to implement the receiving and sending functions of the controller 140.

FIG. 4 is a schematic diagram showing a hardware structure of a network node 150 according to the present application. The network node 150 includes: a memory 1501 and a processor 1502. The memory 1501 is configured to store program instructions, and the processor 1502 is configured to call the program instructions in the memory 1501 to execute the steps performed by the head node in the first method embodiment described above. The implementation principles and beneficial effects thereof are similar, and details are not repeated herein.

Optionally, the controller further includes a communication interface 1503, which may be connected to the processor 1502 through a bus 1504. The processor 1502 may control the communication interface 1503 to implement the receiving and sending functions of the network node 150.

The integrated modules implemented in the form of software functional modules described above may be stored in one computer-readable storage medium. The above software functional modules are stored in one storage medium and include a plurality of instructions for causing a computer device (which may be a personal computer, a server, or a network device, etc.) or a processor (English: processor) to execute part of the steps of the methods according to the various embodiments of the present application.

In the above embodiments, all or part of the steps may be implemented by software, hardware, firmware, or any combination thereof. When implemented by software, it may be implemented in whole or in part in the form of a computer program product. The computer program product includes one or more computer program instructions. When the computer program instructions are loaded and executed on a computer, the processes or functions according to the embodiments of the present application are generated in whole or in part. The computer may be a general-purpose computer, a special-purpose computer, a computer network, or other programmable apparatuses. Computer instructions may be stored in one storage medium or transmitted from one storage medium to another. For example, the computer instructions may be transmitted from one website, computer, server, or data center to another website, computer, server, or data center by wired (e.g., coaxial cable, optical fiber, digital subscriber line (DSL)) or wireless (e.g., infrared, wireless, microwave, etc.) means. The storage medium may be any available medium that is accessible by a computer, or a data storage device such as a server or data center integrated with one or more available media. The available medium may be a magnetic medium (for example, a floppy disk, a hard disk, a magnetic tape), an optical medium (for example, a DVD), or a semiconductor medium (for example, a solid-state disk solid-state disk, SSD), etc.

Based on the above hardware structure of the mobile terminal and the communication network system, various embodiments of the present application are proposed.

Technical Terms Involved in the Embodiments are as follows.

BM: Beam Management, beam management.

MAC CE: Media Access Control Control Element, media access control control element.

RRC: Radio Resource Control, radio resource control.

RACH-less: random access channel-less.

LTM: L1/L2 Triggered Mobility, Layer 1/Layer 2 triggered mobility.

CLTM: Conditional L1/L2 Triggered Mobility, conditional Layer 1/Layer 2 triggered mobility.

TA: Timing Advance, timing advance.

TAT: Timing Advance Timer, timing advance timer.

TCI: Transmission Configuration Indicator, transmission configuration indicator.

PDCCH: Physical Downlink Control Channel, physical downlink control channel.

### First Embodiment

Referring to FIG. 5, FIG. 5 is a schematic flowchart of a processing method shown in a first embodiment. The processing method according to the embodiment of the present application is applicable to a terminal device (e.g., a mobile phone), and includes the following step:
S2: applying a timing advance value of at least one candidate cell in response to determining that a first condition is satisfied.

Optionally, when a conditional LTM-switch supports random access channel-less switch, an execution condition may be evaluated by a MAC layer and/or an RRC layer, and the conditional LTM-switch may be triggered when a candidate cell satisfies the execution condition. Since the conditional LTM-switch is autonomously evaluated and executed by the terminal device, for example, the conditional LTM-switch is triggered when the MAC layer determines that the candidate cell satisfies a Layer 1 measurement event and/or the RRC layer determines that the candidate cell satisfies a Layer 3 measurement event, the terminal device does not have a clear mechanism for applying timing advance during random access channel-less conditional LTM-switch.

Optionally, the terminal device applies the timing advance value of the at least one candidate cell in response to determining that the first condition is satisfied.

Optionally, satisfying the first condition includes at least one of the following:
a timing advance timer and/or a valid time alignment timer being running;
a media access control layer receiving a conditional LTM cell switch request and/or a candidate cell identifier sent by a radio resource control layer; or
the timing advance value of the at least one candidate cell being not a maximum value.

Optionally, a timing advance value measured by the terminal device is applied in a case that the timing advance value of the at least one candidate cell is the maximum value.

Optionally, the terminal device receives conditional LTM configuration information sent by a network device.

Optionally, the conditional LTM configuration information is carried in radio resource control reconfiguration signaling.

Optionally, the conditional LTM configuration information includes at least one of a conditional LTM candidate identifier, a conditional LTM execution condition identifier, a Layer 1 measurement event identifier, the timing advance timer, or the valid time alignment timer.

Optionally, the conditional LTM execution condition includes an LTM measurement event and/or a Layer 3 measurement event.

Optionally, the LTM measurement event is a Layer 1 measurement event.

Optionally, the RRC layer of the terminal device sends the conditional LTM cell switch request and/or the candidate cell identifier to the MAC layer according to the conditional LTM execution condition.

Optionally, the MAC layer of the terminal device sends indication information to an upper layer (e.g., the RRC layer).

Optionally, the indication information includes at least one of the Layer 1 measurement event identifier, the conditional LTM execution condition identifier, an LTM candidate identifier, or the conditional LTM candidate identifier.

Optionally, the indication information is used to indicate that at least one candidate cell satisfies the LTM measurement event.

Optionally, the indication information is used to trigger the radio resource control layer to perform conditional LTM execution condition evaluation and/or execute conditional LTM cell switch.

Optionally, the conditional LTM cell switch is triggered in a case that the at least one candidate cell satisfies the conditional LTM execution condition.

Optionally, the timing advance timer and/or the valid time alignment timer is started or restarted in a case that the terminal device receives a timing advance value of the at least one candidate cell.

Optionally, the timing advance timer and/or the valid time alignment timer is used for the at least one candidate cell.

According to the technical solution of this embodiment, the timing advance value of the at least one candidate cell is applied in response to determining that the first condition is satisfied, which refines an application mechanism for a timing advance, thereby supporting random access channel-less conditional LTM-switch.

### Second Embodiment

Referring to FIG. 6, FIG. 6 is a schematic flowchart of a processing method according to a second embodiment. On the basis of the foregoing first embodiment of the present application, the processing method further includes the following step:
S0: receiving conditional LTM configuration information.

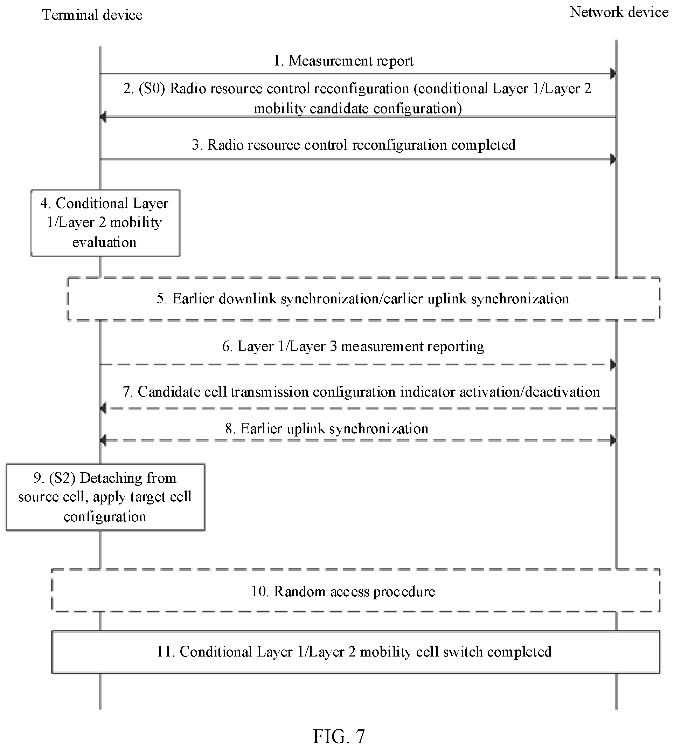

Referring to FIG. 7, FIG. 7 is a schematic interaction timing diagram according to the second embodiment. As shown in FIG. 7, after the terminal device reports a measurement report to the network device (e.g., a source cell), the network device sends radio resource control reconfiguration signaling including the conditional LTM configuration information to the terminal device.

Optionally, the measurement report reported by the terminal device is a Layer 3 measurement report.

Optionally, the source cell acquires a conditional LTM candidate cell configuration.

Optionally, the conditional LTM candidate cell configuration includes a conditional LTM configuration and/or a conditional LTM execution condition.

Optionally, the conditional LTM candidate cell is an Intra-Central Unit (Intra-CU) cell.

Optionally, the source cell and/or a source base station generates the conditional LTM configuration.

Optionally, the conditional LTM configuration includes at least one of a conditional LTM configuration identifier, a candidate cell conditional LTM configuration, or a candidate cell conditional LTM execution condition.

Optionally, the candidate cell conditional LTM execution condition includes a Layer 1 measurement configuration and/or at least one Layer 3 measurement configuration.

Optionally, an LTM measurement event is a Layer 1 (L1, Layer 1) measurement event.

Optionally, the Layer 1 measurement event includes at least one of the following:
event LTM2: beam of serving cell becomes worse than absolute threshold (Beam of serving cell becomes worse than absolute threshold);
event LTM3: beam of candidate cell becomes amount of offset better than beam of serving cell (Beam of candidate cell becomes amount of offset better than beam of serving cell);
event LTM4: beam of candidate cell becomes better than absolute threshold (Beam of candidate cell becomes better than absolute threshold); or
event LTM5: beam of serving cell becomes worse than absolute threshold1 and Beam of candidate cell becomes better than another absolute threshold2 (Beam of serving cell becomes worse than absolute threshold1 AND Beam of candidate cell becomes better than another absolute threshold2).

Optionally, the Layer 1 measurement event may be a beam management (BM, Beam Management) measurement event.

Optionally, the Layer 1 measurement event may be a Layer 1/Layer 2 mobility measurement event.

Optionally, the candidate cell conditional LTM configuration includes at least one of the following: an LTM candidate identifier, an LTM candidate configuration, a conditional LTM candidate configuration, an earlier uplink synchronization configuration, a no reset identity (No reset identity), a serving cell no reset identity, or attemptLTM-Switch (attemptLTM-Switch). Reference may be made to protocol TS 38.300 v14, 6.3.2 LTM configuration for details.

Optionally, the candidate cell conditional LTM configuration includes a serving cell LTM configuration and/or a candidate cell LTM configuration.

Optionally, the candidate cell conditional LTM configuration includes at least one of a conditional LTM candidate identifier, a conditional LTM execution condition identifier, a Layer 1 measurement event identifier, and a valid time alignment timer.

Optionally, the network device sends the radio resource control reconfiguration signaling to the terminal device.

Optionally, the radio resource control reconfiguration signaling carries the conditional LTM configuration.

Optionally, the terminal device stores the conditional LTM configuration and/or sets the conditional LTM execution condition.

Optionally, the terminal device sends radio resource control reconfiguration complete signaling to the network device.

Optionally, the radio resource control reconfiguration complete signaling is used to respond to the radio resource control reconfiguration signaling sent by the network device.

Optionally, the terminal device evaluates a candidate cell according to the conditional LTM configuration.

Optionally, the terminal device evaluates whether any candidate cell satisfies the execution condition according to the candidate cell conditional LTM execution condition.

Optionally, the terminal device performs earlier downlink synchronization and/or earlier uplink synchronization.

Optionally, the network device determines a candidate cell for earlier downlink synchronization through a candidate cell TCI state activation/deactivation MAC CE.

Optionally, the network device carries a timing advance value of at least one candidate cell and/or the LTM candidate identifier through a MAC CE in an earlier uplink synchronization phase.

Optionally, the network device triggers earlier uplink synchronization with the candidate cell through a Physical Downlink Control Channel order (PDCCH order).

Optionally, the network device determines a candidate cell for performing earlier uplink synchronization and/or earlier downlink synchronization according to a Layer 1 measurement result reported by the terminal device.

Optionally, the reported Layer 1 measurement result is at least one of the following reporting manners: periodic reporting, aperiodic reporting, and semi-persistent reporting.

Optionally, the network device carries the timing advance value of the at least one candidate cell and/or the LTM candidate identifier through the MAC CE.

Optionally, the terminal device starts or restarts the valid time alignment timer, e.g., ValidTimeAlignmentTimer, after receiving the timing advance value of the at least one candidate cell.

According to the technical solution of this embodiment, the terminal device receives the conditional LTM configuration information sent by the network device, and further applies the timing advance value of the at least one candidate cell according to the conditional LTM configuration information, which refines an application mechanism for a timing advance, thereby supporting random access channel-less conditional LTM-switch.

### Third Embodiment

On the basis of any one of the foregoing embodiments of the present application, this embodiment further discloses a process in which the terminal device performs conditional LTM cell switch.

Optionally, a terminal device reports a Layer 1 measurement report to a network device.

Optionally, when at least one candidate cell satisfies the Layer 1 measurement event and/or an LTM measurement event, the terminal device reports a Layer 1 measurement report.

Optionally, the Layer 1 measurement report is sent through a MAC CE.

Optionally, the Layer 1 measurement report carries at least one Layer 1 measurement result.

Optionally, the Layer 1 measurement result is at least one of a periodic measurement result, an aperiodic measurement result, and a semi-persistent measurement result.

Optionally, the network device triggers earlier downlink synchronization.

Optionally, the network device determines a candidate cell for earlier downlink synchronization through a candidate cell TCI state activation or deactivation MAC CE.

Optionally, the network device performs earlier uplink synchronization and/or earlier downlink synchronization in response to the measurement report reported by the terminal device when a conditional LTM execution condition is satisfied.

Optionally, the measurement report includes a Layer 1 measurement report and/or a Layer 3 measurement report.

Optionally, the network device triggers earlier uplink synchronization with the candidate cell through a PDCCH order.

Optionally, the terminal device sends a random-access preamble to the candidate cell according to the received PDCCH order.

Optionally, the source cell sends timing advance information of the candidate cell to the terminal device.

Optionally, the terminal device detaches (Detaches) from the source cell and applies a target cell configuration and/or the conditional LTM configuration.

Optionally, when the at least one candidate cell satisfies the candidate cell conditional LTM execution condition, detachment is performed and synchronization with a target cell is performed.

Optionally, the conditional LTM cell switch is triggered when the at least one candidate cell satisfies the candidate cell conditional LTM execution condition.

Optionally, the at least one candidate cell satisfying a candidate cell conditional LTM execution condition includes: satisfying the Layer 1 measurement event and/or satisfying the Layer 3 measurement event.

Optionally, the terminal device initiates a random-access procedure.

Optionally, when the terminal device does not have a target cell timing advance value and/or the target cell timing advance value is a maximum value FFF, and does not have a timing advance value measured by the terminal device, the random-access procedure is initiated.

Optionally, F is a hexadecimal value and may be represented by 4 binary bits, e.g., 1111.

Optionally, FFF is represented by 12 binary bits.

Optionally, the terminal device completes the conditional LTM cell switch.

Optionally, the terminal device sends radio resource control reconfiguration complete signaling according to configured scheduling and/or dynamic scheduling.

Optionally, the terminal device sends the radio resource control reconfiguration complete signaling to the target cell.

Optionally, when the terminal device performs random access channel-less conditional LTM-switch and receives first downlink data scheduling and/or uplink data scheduling, it is considered that the conditional LTM-switch is completed.

Optionally, the terminal device does not stop the timing advance timer and/or the valid time alignment timer after completing the conditional LTM cell switch.

Optionally, the terminal device does not delete or release the timing advance value of the candidate cell after completing the conditional LTM cell switch.

According to the technical solution of this embodiment, the timing advance value of the at least one candidate cell is applied during the execution of the conditional LTM cell switch, which refines an application mechanism for a timing advance, thereby supporting random access channel-less conditional LTM-switch.

### Fourth Embodiment

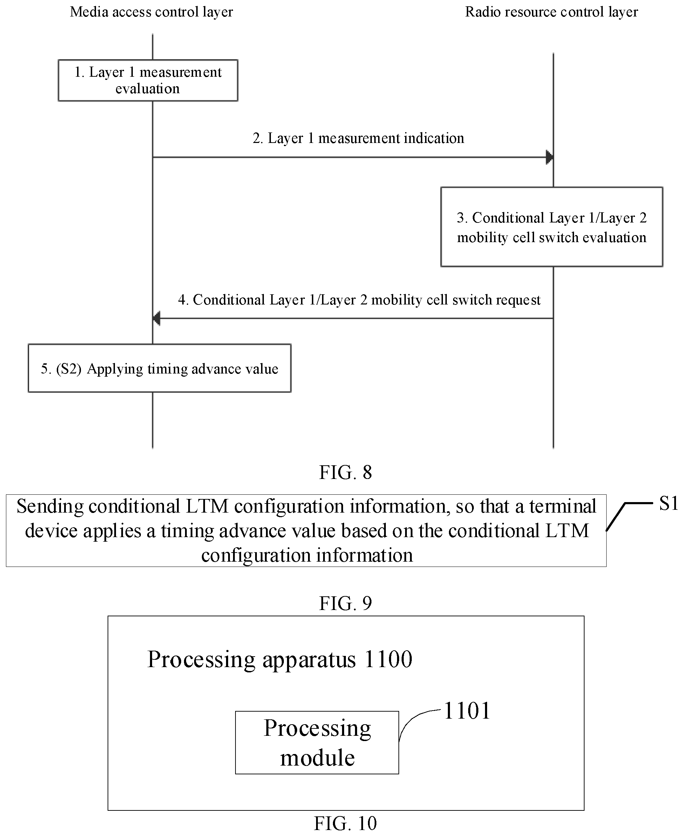

Referring to FIG. 8, FIG. 8 is a schematic interaction timing diagram according to a fourth embodiment. On the basis of any one of the foregoing embodiments of the present application, this embodiment further discloses a solution in which a terminal device detaches (Detaches) from a source cell and applies a target cell configuration.

Optionally, the terminal device includes a media access control layer and a radio resource control layer.

Optionally, the radio resource control layer is located above the media access control layer. Reference may be made to protocol TS 38.300 v18, 4.4.2 for details.

Optionally, the media access control layer evaluates a Layer 1 measurement result.

Optionally, the media access control layer evaluates Layer 1 measurement and/or a Layer 1 measurement event.

Optionally, the media access control layer evaluates the Layer 1 measurement and/or the Layer 1 measurement event according to a physical layer and/or the Layer 1 measurement result.

Optionally, the media access control layer sends indication information to an upper layer (upper layer).

Optionally, the indication information is used to indicate at least one of the following: candidate cell information satisfying the Layer 1 measurement event, candidate cell information satisfying a conditional LTM-switch execution condition, and candidate cell information satisfying conditional LTM-switch.

Optionally, the upper layer includes the radio resource control layer.

Optionally, when at least one Layer 1 measurement satisfies the Layer 1 measurement event, a Layer 1 measurement indication is sent.

Optionally, the indication information includes at least one of a Layer 1 measurement event identifier, a conditional LTM execution condition identifier, an LTM candidate identifier, and a conditional LTM candidate identifier.

Optionally, the radio resource control layer performs conditional Layer 1/Layer 2 mobility evaluation.

Optionally, the radio resource control layer performs the conditional Layer 1/Layer 2 mobility evaluation according to the reported indication information.

Optionally, the radio resource control layer determines, according to the reported indication information, a candidate cell satisfying the Layer 1 measurement event.

Optionally, the radio resource control layer determines the candidate cell satisfying the Layer 1 measurement event according to at least one of the following: the Layer 1 measurement event identifier, satisfying the conditional LTM execution condition identifier, the LTM candidate identifier, and the conditional LTM candidate identifier.

Optionally, when a Layer 1/Layer 2 mobility candidate cell satisfies the Layer 1 measurement event and/or a Layer 3 measurement event, conditional Layer 1/Layer 2 mobility cell switch is performed, for example:
when the Layer 1/Layer 2 mobility candidate cell satisfies the Layer 1 measurement event, the conditional Layer 1/Layer 2 mobility cell switch is performed;
when the Layer 1/Layer 2 mobility candidate cell satisfies the Layer 3 measurement event, the conditional Layer 1/Layer 2 mobility cell switch is performed; and
when the Layer 1/Layer 2 mobility candidate cell satisfies both the Layer 1 measurement event and the Layer 3 measurement event, the conditional Layer 1/Layer 2 mobility cell switch is performed.

Optionally, satisfying the Layer 3 measurement event includes: satisfying one Layer 1 measurement event, and/or satisfying two Layer 3 measurement events.

Optionally, when at least one Layer 1/Layer 2 mobility candidate cell satisfies the Layer 1 measurement event and/or the Layer 3 measurement event, the conditional Layer 1/Layer 2 mobility cell switch is performed.

Optionally, the terminal device autonomously determines a candidate cell on which the conditional Layer 1/Layer 2 mobility cell switch is to be performed.

Optionally, the radio resource control layer sends a conditional Layer 1/Layer 2 mobility cell switch request to the media access control layer and/or a lower layer.

Optionally, the radio resource control layer determines a candidate cell for performing the conditional Layer 1/Layer 2 mobility cell switch, and sends the conditional Layer 1/Layer 2 mobility cell switch request to the media access control layer.

Optionally, the conditional Layer 1/Layer 2 mobility cell switch request carries conditional Layer 1/Layer 2 mobility cell switch information.

Optionally, the conditional Layer 1/Layer 2 mobility cell switch information includes a Layer 1/Layer 2 mobility candidate cell identifier and/or a physical cell identifier of the Layer 1/Layer 2 mobility candidate cell.

According to the technical solution of this embodiment, when the radio resource control layer of the terminal device determines to initiate the conditional LTM cell switch and during the process of detaching (Detaching) from the source cell and applying the target cell configuration, interaction is performed between the media access control layer and the radio resource control layer, which refines an application mechanism for a timing advance, thereby supporting random access channel-less conditional LTM-switch.

### Fifth Embodiment

On the basis of any one of the foregoing embodiments of the present application, this embodiment further discloses a solution in which a terminal device applies a timing advance value of at least one candidate cell.

Optionally, a media access control layer receives a conditional Layer 1/Layer 2 mobility cell switch request.

Optionally, the media access control layer applies the timing advance value of the at least one candidate cell according to the conditional Layer 1/Layer 2 mobility cell switch request.

Optionally, the media access control layer applies the timing advance value of the at least one candidate cell according to conditional Layer 1/Layer 2 mobility cell switch information. For example, the media access control layer determines the timing advance value of the at least one candidate cell according to a Layer 1/Layer 2 mobility candidate cell identifier and/or a physical cell identifier of a Layer 1/Layer 2 mobility candidate cell, and applies the timing advance value of the at least one candidate cell.

Optionally, the media access control layer applies the timing advance value according to a valid time alignment timer. For example, when the valid time alignment timer is running, the timing advance value is applied; when the valid time alignment timer is not running, a random-access procedure is initiated.

Optionally, the terminal device determines that at least one candidate cell is a target cell, and applies a timing advance value of the target cell.

Optionally, when the terminal device applies the timing advance value of the target cell, it is considered that random access channel-less conditional LTM cell switch is being performed, and/or a timing advance timer is set as the valid time alignment timer.

Optionally, when the terminal device applies the timing advance value of the target cell, it is considered that random access channel-less conditional LTM cell switch is being performed, and/or a timing advance timer is set as the valid time alignment timer and started.

Optionally, when the terminal device applies the timing advance value of the target cell, it is considered that random access channel-less conditional LTM cell switch is being performed, and/or a timing advance timer is started.

Optionally, when the terminal device performs the random access channel-less conditional LTM cell switch, it indicates a lower layer (e.g., a physical layer control layer) to omit the random-access procedure.

Optionally, when the terminal device applies the timing advance value of the target cell, it stops the valid time alignment timer, and/or indicates the lower layer (e.g., a physical layer) to omit the random-access procedure.

Optionally, the media access control layer determines whether to apply the timing advance value according to the timing advance timer. For example, when the timing advance timer is running, the timing advance value is applied.

Optionally, the media access control layer applies the timing advance value according to the conditional Layer 1/Layer 2 mobility cell switch information, and/or the media access control layer applies the timing advance value according to the timing advance timer and/or the valid time alignment timer. For example, the media access control layer determines a candidate cell according to the Layer 1/Layer 2 mobility candidate cell identifier and/or the physical cell identifier of the Layer 1/Layer 2 mobility candidate cell, and if a valid time alignment timer of the candidate cell is running, applies the timing advance value of the at least one candidate cell.

Optionally, the media access control layer determines whether to apply the timing advance value according to the timing advance timer. For example, when the timing advance timer is running, the timing advance value is applied; and/or when the timing advance timer is not running, a random-access procedure is initiated.

Optionally, when the terminal device applies the timing advance value of the target cell, it is considered that the random access channel-less conditional LTM cell switch is being performed, and/or the lower layer is indicated to omit the random-access procedure.

Optionally, the media access control layer applies the timing advance value according to the conditional Layer 1/Layer 2 mobility cell switch information, and/or the media access control layer applies the timing advance value according to the timing advance timer. For example, the media access control layer determines a candidate cell according to the Layer 1/Layer 2 mobility candidate cell identifier and/or the physical cell identifier of the Layer 1/Layer 2 mobility candidate cell, and if a timing advance timer of the candidate cell is running, applies the timing advance value or applies the timing advance value of the at least one candidate cell.

Optionally, the media access control layer further determines whether to apply a timing advance of the target cell according to the conditional Layer 1/Layer 2 mobility cell switch information by determining that timing advance information of the target cell is not set to a maximum value (e.g., FFF). For example, the media access control layer determines the at least one candidate cell according to the Layer 1/Layer 2 mobility candidate cell identifier and/or the physical cell identifier of the Layer 1/Layer 2 mobility candidate cell, and if the timing advance value of the at least one candidate cell is not FFF, applies the timing advance value; or the media access control layer determines the at least one candidate cell according to the Layer 1/Layer 2 mobility candidate cell identifier and/or the physical cell identifier of the Layer 1/Layer 2 mobility candidate cell, and if the timing advance value of the at least one candidate cell is FFF, applies a timing advance value autonomously measured by the terminal device.

According to the technical solution of this embodiment, by explicitly applying the timing advance value of the at least one candidate cell and/or applying the timing advance value autonomously measured by the terminal device, an application mechanism for a timing advance is refined, thereby supporting random access channel-less conditional LTM-switch.

### Sixth Embodiment

Referring to FIG. 9, FIG. 9 is a schematic flowchart of a processing method according to a sixth embodiment. The method in this embodiment is applicable to a network device (e.g., a base station), and includes the following step:
S1: sending conditional LTM configuration information, so that a terminal device applies a timing advance value based on the conditional LTM configuration information.

Optionally, the network device sends the conditional LTM configuration information to the terminal device.

Optionally, the terminal device receives the conditional LTM configuration information sent by the network device.

Optionally, the conditional LTM configuration information is carried in radio resource control reconfiguration signaling.

Optionally, the conditional LTM configuration information includes at least one of a conditional LTM candidate identifier, a conditional LTM execution condition identifier, a Layer 1 measurement event identifier, a timing advance timer, or a valid time alignment timer.

Optionally, the conditional LTM execution condition includes an LTM measurement event and/or a Layer 3 measurement event.

Optionally, an RRC layer of the terminal device sends a conditional LTM cell switch request and/or a candidate cell identifier to an MAC layer according to the conditional LTM execution condition.

Optionally, the MAC layer of the terminal device sends indication information to an upper layer (e.g., the RRC layer).

Optionally, the indication information includes at least one of the Layer 1 measurement event identifier, the conditional LTM execution condition identifier, an LTM candidate identifier, and the conditional LTM candidate identifier.

Optionally, the indication information is used to indicate that at least one candidate cell satisfies the LTM measurement event.

Optionally, the indication information is used to trigger the radio resource control layer to perform conditional LTM execution condition evaluation and/or execute conditional LTM cell switch.

Optionally, the conditional LTM cell switch is triggered in a case that the at least one candidate cell satisfies the conditional LTM execution condition.

Optionally, the timing advance timer and/or the valid time alignment timer is started or restarted in a case that the terminal device receives a timing advance value of the at least one candidate cell.

Optionally, the timing advance timer and/or the valid time alignment timer is used for the at least one candidate cell.

Optionally, the terminal device applies the timing advance value of the at least one candidate cell in a case that a first condition is satisfied.

Optionally, satisfying the first condition includes at least one of the following:
the timing advance timer and/or the valid time alignment timer being running;
a media access control layer receiving a conditional LTM cell switch request and/or a candidate cell identifier sent by a radio resource control layer; or
the timing advance value of the at least one candidate cell being not a maximum value.

Optionally, a timing advance value measured by the terminal device is applied in a case that the timing advance value of the at least one candidate cell is the maximum value.

According to the technical solution of this embodiment, the network device sends the conditional LTM configuration information, so that the terminal device applies the timing advance value based on the conditional LTM configuration information, which refines an application mechanism for a timing advance, thereby supporting random access channel-less conditional LTM-switch.

### Seventh Embodiment

Referring to FIG. 10, FIG. 10 is a first schematic structural diagram of a processing apparatus according to an embodiment of the present application. The apparatus may be mounted on or serve as the terminal device in the foregoing method embodiments. The processing apparatus shown in FIG. 10 may be configured to perform some or all the functions in the method embodiments described above. As shown in FIG. 10, the processing apparatus 1100 includes:
a processing module 1101, configured to apply a timing advance value of at least one candidate cell in response to determining that a first condition is satisfied.

Optionally, satisfying the first condition includes at least one of the following:
a timing advance timer and/or a valid time alignment timer being running;
a media access control layer receiving a conditional LTM cell switch request and/or a candidate cell identifier sent by a radio resource control layer; or
the timing advance value of the at least one candidate cell being not a maximum value.

Optionally, the apparatus further includes at least one of the following:
receiving conditional LTM configuration information;
applying a timing advance value measured by the terminal device in a case that the timing advance value of the at least one candidate cell is the maximum value;
starting the timing advance timer and/or the valid time alignment timer; or
the media access control layer reporting indication information to the radio resource control layer.

Optionally, the apparatus further includes at least one of the following:
the conditional LTM configuration information being carried in radio resource control reconfiguration signaling;
the conditional LTM configuration information including at least one of a conditional LTM candidate identifier, a conditional LTM execution condition identifier, a Layer 1 measurement event identifier, the timing advance timer, or the valid time alignment timer;
the indication information including at least one of the Layer 1 measurement event identifier, the conditional LTM execution condition identifier, an LTM candidate identifier, or the conditional LTM candidate identifier;
the indication information being used to trigger the radio resource control layer to perform conditional LTM execution condition evaluation and/or execute conditional LTM cell switch; or
the timing advance timer and/or the valid time alignment timer being used for the at least one candidate cell.

Optionally, the apparatus further includes at least one of the following:
in response to determining that a conditional LTM execution condition is satisfied, the radio resource control layer sending the conditional LTM cell switch request and/or the candidate cell identifier to the media access control layer; or
triggering the conditional LTM cell switch in response to determining that the at least one candidate cell satisfies the conditional LTM execution condition.

The processing apparatus provided by the embodiment of the present application may execute the technical solutions shown in the corresponding method embodiments above, and the implementation principles and beneficial effects thereof are similar, which will not be described again herein.

### Eighth Embodiment

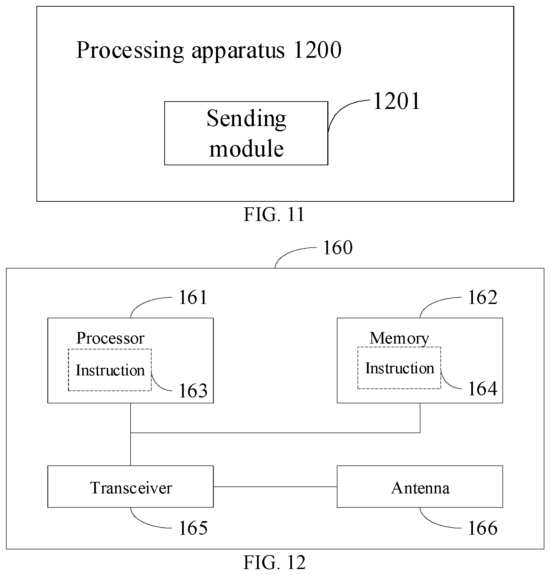

Referring to FIG. 11, FIG. 11 is a second schematic structural diagram of a processing apparatus according to an embodiment of the present application. The apparatus may be mounted on or serve as the network device in the foregoing method embodiments. The processing apparatus shown in FIG. 11 may be configured to perform some or all the functions in the method embodiments described above. As shown in FIG. 11, the processing apparatus 1200 includes:
a sending module 1201, configured to send conditional LTM configuration information, so that a terminal device applies a timing advance value based on the conditional LTM configuration information.

Optionally, the apparatus further includes at least one of the following:
the conditional LTM configuration information being carried in radio resource control reconfiguration signaling;
the conditional LTM configuration information including at least one of a conditional LTM candidate identifier, a conditional LTM execution condition identifier, a Layer 1 measurement event identifier, a timing advance timer, or a valid time alignment timer; or
the timing advance value including a timing advance value of at least one candidate cell and/or a timing advance value measured by the terminal device.

Optionally, the terminal device applying the timing advance value based on the conditional LTM configuration information includes at least one of the following:
in response to determining that the conditional LTM configuration information satisfies a first condition, the terminal device applying the timing advance value of the at least one candidate cell; or
if the timing advance value of the at least one candidate cell is a maximum value, the terminal device applying the timing advance value measured by the terminal device.

Optionally, satisfying the first condition includes at least one of the following:
the timing advance timer and/or the valid time alignment timer being running;
the timing advance value of the at least one candidate cell being not the maximum value; or
a media access control layer of the terminal device receiving a conditional LTM cell switch request and/or a candidate cell identifier sent by a radio resource control layer.

Optionally, the apparatus further includes at least one of the following:
the timing advance timer and/or the valid time alignment timer being started in a case that the terminal device receives the timing advance value of the at least one candidate cell;
the timing advance timer and/or the valid time alignment timer being started in a case that the timing advance value of the at least one candidate cell is the maximum value; or
the media access control layer of the terminal device reporting indication information to the radio resource control layer.

Optionally, the apparatus further includes at least one of the following:
the indication information including at least one of the Layer 1 measurement event identifier, the conditional LTM execution condition identifier, an LTM candidate identifier, or the conditional LTM candidate identifier;
the indication information being used to trigger the radio resource control layer of the terminal device to perform conditional LTM execution condition evaluation and/or execute conditional LTM cell switch; or
the timing advance timer and/or the valid time alignment timer being used for the at least one candidate cell.

The processing apparatus provided by the embodiment of the present application and the technical solutions shown in the corresponding method embodiments above, and the implementation principles and beneficial effects thereof are similar, which will not be described again herein.

Referring to FIG. 12, FIG. 12 is a schematic structural diagram of a communication device according to an embodiment of the present application. As shown in FIG. 12, the communication device 160 described in this embodiment may be the terminal device (or a component usable for a terminal device) or the network device (or a component usable for a network device) mentioned in the above method embodiments. The communication device 160 may be configured to implement the methods described in the above method embodiments corresponding to the terminal device or the network device. For details, reference may be made to the descriptions in the above method embodiments.

The communication device 160 may include one or more processors 161, which may also be referred to as processing units, and may implement certain control or processing functions. The processor 161 may be a general-purpose processor or a special-purpose processor, etc. For example, it may be a baseband processor or a central processing unit. The baseband processor may be configured to process communication protocols and communication data, and the central processing unit may be configured to control the communication device, execute software programs, and process data of the software programs.

Optionally, the processor 161 may also store instructions 163 or data (e.g., intermediate data). Optionally, the instructions 163 may be executed by the processor 161, so that the communication device 160 executes the methods described in the above method embodiments corresponding to the terminal device or the network device.

Optionally, the communication device 160 may include a circuit, which may implement the functions of sending, receiving, or communication in the foregoing method embodiments.

Optionally, the communication device 160 may include one or more memories 162, on which instructions 164 may be stored. The instructions may be executed on the processor 161, so that the communication device 160 executes the methods described in the above method embodiments.

Optionally, the memory 162 may also store data. The processor 161 and the memory 162 may be provided separately or integrated together.

Optionally, the communication device 160 may further include a transceiver 165 and/or an antenna 166. The processor 161 may be referred to as a processing unit, and controls the communication device 160 (a terminal device, a core network device, or a radio access network device). The transceiver 165 may be referred to as a transceiving unit, a transceiver, a transceiving circuit, or a transceiver, etc., and is configured to implement the transceiving function of the communication device 160.

Optionally, if the communication device 160 is configured to implement operations corresponding to the terminal device in the foregoing embodiments, for example, the transceiver 165 and/or the processor 161 may apply the timing advance value of the at least one candidate cell in response to determining that the first condition is satisfied.

Optionally, for the specific implementation processes of the processor 161 and the transceiver 165, reference may be made to the relevant descriptions in the above embodiments, and details are not repeated herein.

Optionally, if the communication device 160 is configured to implement operations corresponding to the network device in the foregoing embodiments, for example, the transceiver 165 may send the conditional LTM configuration information, so that the terminal device applies the timing advance value based on the conditional LTM configuration information.

Optionally, for the specific implementation processes of the processor 161 and the transceiver 165, reference may be made to the relevant descriptions in the above embodiments, and details are not repeated herein.

The processor 161 and the transceiver 165 described in the present application may be implemented on an IC (Integrated Circuit, integrated circuit ), an analog integrated circuit, a RFIC (Radio Frequency Integrated Circuit, radio frequency integrated circuit ), a mixed signal integrated circuit, an ASIC (Application Specific Integrated Circuit, application specific integrated circuit), a PCB (Printed Circuit Board, printed circuit board), an electronic device, etc. The processor 161 and the transceiver 165 may also be manufactured using various integrated circuit process technologies, such as CMOS (Complementary Metal Oxide Semiconductor, complementary metal oxide semiconductor), NMOS (N-type Metal-Oxide-Semiconductor, N-type metal-oxide-semiconductor), PMOS (Positive channel Metal Oxide Semiconductor, positive channel metal oxide semiconductor), BJT (Bipolar Junction Transistor, bipolar junction transistor), Bipolar CMOS (BiCMOS), silicon germanium (SiGe), gallium arsenide (GaAs), etc. In the present application, a communication device may be a terminal device (e.g., a mobile phone) or a network device (e.g., a base station), and the specific meaning needs to be clarified according to the context. In addition, a terminal device may also be implemented in various forms. For example, the terminal device described in the present application may include mobile terminals such as a mobile phone, a tablet computer, a notebook computer, a palmtop computer, a personal digital assistant (Personal Digital Assistant, PDA), a portable media player (Portable Media Player, PMP), a navigation device, a wearable device, a smart bracelet, a pedometer, and fixed terminal devices such as a digital TV and a desktop computer.

Although in the above description of the embodiments, the communication device is described by taking a terminal device or a network device as an example, the scope of the communication device described in the present application is not limited to the above terminal device or network device, and the structure of the communication device may not be limited by FIG. 12. A communication device may be an independent device or a part of a larger device.

An embodiment of the present application further provides a communication system, which includes: the terminal device according to any one of the above embodiments; and the network device according to any one of the above embodiments.

An embodiment of the present application further provides a communication device, which includes a memory and a processor. The memory stores a processing program, and the processing program, when executed by the processor, implements the step of the processing method according to any one of the above embodiments.

The communication device in the present application may be a terminal device (e.g., a mobile phone), a network device (e.g., a base station), or a chip (e.g., an SOC or a baseband chip with communication functionality), and the specific meaning shall be clarified according to the context.

An embodiment of the present application further provides a computer storage medium, where a processing program is stored on the computer storage medium, and the processing program, when executed by a processor, implements the step of the processing method according to any one of the above embodiments.

In the embodiments of the communication device and the computer storage medium provided in the embodiments of the present application, all technical features of any one of the above processing method embodiments may be included, and the extended and explained contents of the specification are basically the same as those of the above method embodiments, which will not be described again herein.

An embodiment of the present application further provides a computer program product, which includes computer program code. When the computer program code runs on a computer, the computer is caused to execute the methods in the various possible implementations described above. An embodiment of the present application further provides a chip, which includes a memory and a processor. The memory is configured to store a computer program, and the processor is configured to call and run the computer program from the memory, so that a device installed with the chip executes the methods in the various possible implementations described above.

It can be understood that the above scenarios are merely examples, and do not constitute a limitation on the application scenarios of the technical solutions provided by the embodiments of the present application. The technical solutions of the present application may also be applied to other scenarios. For example, a person skilled in the art will appreciate that with the evolution of system architectures and the emergence of new business scenarios, the technical solutions provided by the embodiments of the present application are also applicable to similar technical problems. The serial numbers of the embodiments of the present application are merely for description, and do not represent the advantages and disadvantages of the embodiments. The steps in the method of the embodiments of the present application may be adjusted, combined, or deleted according to actual needs. The units in the devices of the embodiments of the present application may be combined, divided, or deleted according to actual needs. In the present application, the same or similar term concepts, technical solutions, and/or application scenarios are generally described in detail only when they appear for the first time. When they appear again later, for the sake of brevity, detailed descriptions are generally not repeated. For understanding the technical solutions of the present application, reference may be made to the previous relevant detailed descriptions for the same or similar term concepts, technical solutions, and/or application scenarios that are not described in detail later. In the present application, the description of each embodiment has its own emphasis. For parts that are not detailed or recorded in a certain embodiment, reference may be made to the relevant descriptions of other embodiments. The various technical features of the technical solutions of the present application may be combined arbitrarily. For the sake of brevity, all possible combinations of the various technical features in the above embodiments are not described. However, as long as there is no contradiction between the combinations of these technical features, they should all be considered as falling within the scope recorded in the present application.

Through the description of the above embodiments, a person skilled in the art can clearly understand that the methods of the above embodiments can be implemented by means of software plus a necessary general hardware platform, and certainly can also be implemented by hardware, but in many cases the former is a better implementation. Based on such an understanding, the technical solutions of the present application essentially or the part contributing to the prior art may be embodied in the form of a software product. The computer software product is stored in one storage medium (e.g., ROM/RAM, magnetic disk, optical disk) as described above, and includes a plurality of instructions for causing a terminal device (which may be a mobile phone, a computer, a server, a controlled terminal device, or a network device, etc.) to execute the methods of the various embodiments of the present application. In the above embodiments, all or part of the steps may be implemented by software, hardware, firmware, or any combination thereof. When implemented by software, it may be implemented in whole or in part in the form of a computer program product. The computer program product includes one or more computer program instructions. When the computer program instructions are loaded and executed on a computer, the processes or functions according to the embodiments of the present application are generated in whole or in part. The computer may be a general-purpose computer, a special-purpose computer, a computer network, or other programmable apparatuses. Computer instructions may be stored in one storage medium or transmitted from one storage medium to another. For example, the computer instructions may be transmitted from one website, computer, server, or data center to another website, computer, server, or data center by wired (e.g., coaxial cable, optical fiber, digital subscriber line) or wireless (e.g., infrared, wireless, microwave, etc.) means. The storage medium may be any available medium that is accessible by a computer, or a data storage device such as a server or data center integrated with one or more available media. The available medium may be a magnetic medium (e.g., a floppy disk, a hard disk, a magnetic tape), an optical medium (e.g., a DVD), or a semiconductor medium (e.g., a solid-state disk Solid-State Disk (SSD)), etc. The above are only preferred embodiments of the present application, and are not intended to limit the patent scope of the present application. All equivalent structural or equivalent process transformations made by using the contents of the specification and drawings of the present application, or directly or indirectly applied to other related technical fields, are similarly included in the patent protection scope of the present application.

## Claims

1. A processing method, applied to a terminal device, and comprising the following step:
S2: applying a timing advance value of at least one candidate cell in response to determining that a first condition is satisfied.

2. The method according to claim 1, wherein satisfying the first condition comprises at least one of the following:
a timing advance timer and/or a valid time alignment timer being running;
a media access control layer receiving a conditional LTM cell switch request and/or a candidate cell identifier sent by a radio resource control layer; or
the timing advance value of the at least one candidate cell being not a maximum value.

3. The method according to claim 2, further comprising at least one of the following:
receiving conditional LTM configuration information;
applying a timing advance value measured by the terminal device in a case that the timing advance value of the at least one candidate cell is the maximum value;
starting the timing advance timer and/or the valid time alignment timer; or
the media access control layer reporting indication information to the radio resource control layer.

4. The method according to claim 3, further comprising at least one of the following:
the conditional LTM configuration information being carried in radio resource control reconfiguration signaling;
the conditional LTM configuration information comprising at least one of a conditional LTM candidate identifier, a conditional LTM execution condition identifier, a Layer 1 measurement event identifier, the timing advance timer, or the valid time alignment timer;
the indication information comprising at least one of the Layer 1 measurement event identifier, the conditional LTM execution condition identifier, an LTM candidate identifier, or the conditional LTM candidate identifier;
the indication information being used to trigger the radio resource control layer to perform conditional LTM execution condition evaluation and/or execute conditional LTM cell switch; or
the timing advance timer and/or the valid time alignment timer being used for the at least one candidate cell.

5. The method according to claim 4, further comprising at least one of the following:
in response to determining that a conditional LTM execution condition is satisfied, the radio resource control layer sending the conditional LTM cell switch request and/or the candidate cell identifier to the media access control layer; or
triggering the conditional LTM cell switch in response to determining that the at least one candidate cell satisfies the conditional LTM execution condition.

6. A processing method, applied to a network device, and comprising the following step:
S1: sending conditional LTM configuration information, so that a terminal device applies a timing advance value based on the conditional LTM configuration information.

7. The method according to claim 6, further comprising at least one of the following:
the conditional LTM configuration information being carried in radio resource control reconfiguration signaling;
the conditional LTM configuration information comprising at least one of a conditional LTM candidate identifier, a conditional LTM execution condition identifier, a Layer 1 measurement event identifier, a timing advance timer, or a valid time alignment timer; or
the timing advance value comprising a timing advance value of at least one candidate cell and/or a timing advance value measured by the terminal device.

8. The method according to claim 7, wherein the terminal device applying the timing advance value based on the conditional LTM configuration information comprises at least one of the following:
in response to determining that the conditional LTM configuration information satisfies a first condition, the terminal device applying the timing advance value of the at least one candidate cell; or
if the timing advance value of the at least one candidate cell is a maximum value, the terminal device applying the timing advance value measured by the terminal device.

9. The method according to claim 8, wherein satisfying the first condition comprises at least one of the following:
the timing advance timer and/or the valid time alignment timer being running;
the timing advance value of the at least one candidate cell being not the maximum value; or
a media access control layer of the terminal device receiving a conditional LTM cell switch request and/or a candidate cell identifier sent by a radio resource control layer.

10. The method according to claim 9, further comprising at least one of the following:
the timing advance timer and/or the valid time alignment timer being started in a case that the terminal device receives the timing advance value of the at least one candidate cell;
the timing advance timer and/or the valid time alignment timer being started in a case that the timing advance value of the at least one candidate cell is the maximum value; or
the media access control layer of the terminal device reporting indication information to the radio resource control layer.

11. The method according to claim 10, further comprising at least one of the following:
the indication information comprising at least one of the Layer 1 measurement event identifier, the conditional LTM execution condition identifier, an LTM candidate identifier, or the conditional LTM candidate identifier;
the indication information being used to trigger the radio resource control layer of the terminal device to perform conditional LTM execution condition evaluation and/or execute conditional LTM cell switch; or
the timing advance timer and/or the valid time alignment timer being used for the at least one candidate cell.

12. A communication device, comprising: a memory, a processor, and a processing program stored on the memory and executable on the processor, wherein the processing program, when executed by the processor, implements the step of the processing method according to claim 1 or 6.

13. A computer-readable storage medium, wherein a computer program is stored on the computer-readable storage medium, and the computer program, when executed by a processor, implements the step of the processing method according to claim 1 or 6.
